Europäisches Patentamt

European Patent Office

Office européen des brevets

(11) Publication number: **0 137 282**
A2

## EUROPEAN PATENT APPLICATION

(21) Application number: **84110311.2**

(22) Date of filing: **30.08.84**

(51) Int. Cl.⁴: **F 16 K 31/06**

(30) Priority: **28.09.83 US 536475**

(43) Date of publication of application:
**17.04.85 Bulletin 85/16**

(84) Designated Contracting States:
**DE FR GB IT**

(71) Applicant: **Canadian Fram Limited**
**540 Park Avenue East P.O. Box 2014**
**Chatham Ontario N7M 5M7(CA)**

(72) Inventor: **Cook, John Edward**
**17 Kingsway Drive**
**Chatham Ontario, N7L 2S8(CA)**

(74) Representative: **Brullé, Jean et al,**
**Service Brevets Bendix 44, rue François 1er**
**F-75008 Paris(FR)**

(54) **Electro-mechanically controlled EGR valve and method.**

(57) An EGR system (12) and method for controlling the amount of exhaust gas recirculation flow between an exhaust gas conduit and the intake manifold having a plurality of solenoid actuated valves (22) situated in a conduit linking the exhaust gas system and the intake manifold having associated with each of the plurality of solenoid responsive valves (22) an orifice (70) sized to permit the flow of a predetermined though different fraction of the total desired exhaust gas flow including means of activating particular solenoids in a predetermined order such that the desired composite flow through the orifices is achieved.

Fig-1

EP 0 137 282 A2

Croydon Printing Company Ltd.

-1-

## ELECTRO-MECHANICALLY CONTROLLED
## EGR VALVE AND METHOD

### Background and Summary of the Invention

The present invention relates to electro-mechanically controlled EGR valves that are capable of controlling exhaust gas flow in a predetermined number of discrete steps in response to electric control signals.

EGR valves comprise an integral portion of emission control systems. They are used to reduce the engine exhaust emissions. The EGR valve controls the percentage of exhaust gas that is allowed to enter the intake manifold. By recirculating a percentage of the exhaust gas, lower cylinder combustion temperatures are achieved which result in reduced levels of NOX emissions.

EGR valves are typically diaphragm actuated devices. Engine manifold vacuum is typically supplied to an EGR valve diaphragm and modulated either electrically or pneumatically. These prior vacuum control valves have a number of limitations. As an example, if utilized with the smaller range of 4-cylinder vehicles a sufficient level of manifold vacuum may not be available to adequately control the EGR valve during all driving conditions. Additionally, diaphragm activated valves exhibit a relatively slow response. Furthermore, the physical characteristics of the diaphragm are subject to change which results in uncontrolled changes in the performance characteristic of the EGR valve. In addition, many existing EGR valves utilize a tapered pintle valve which moves in relation to a valve seat to meter the quantity of exhaust gases permitted to flow from an exhaust gas conduit into the intake manifold. The ability of the EGR valve to accurately meter exhaust gas flow is significantly reduced because of carbon build up

-2-

on the valve seat and on the long tapered pintle metering surface of the pintle.

The present EGR valve, as described in detail below, overcomes all of the above noted deficiencies. The present invention exhibits rapid response and utilizes a plurality of solenoids to control the exhaust gas recirculation flow in a digital manner over a discrete number of steps. In the preferred embodiment of the invention three solenoid control valves are utilized. The flow through the EGR valve is metered by a sharp-edged orifice, one associated with each solenoid control valve, of a variable through preset size. Furthermore, the sharp-edged orifice exhibits much less of a tendency to accumulate carbon deposits than the above noted tapered pintle valve.

## Brief Description of the Drawings

In the drawings:

FIGURE 1 is a cross-sectional view of a solenoid actuated EGR valve.

FIGURE 2 is a top view of an EGR valve illustrating the placement of three solenoids.

FIGURE 3 is a cross-sectional view taken through Section 3-3 of FIGURE 1.

FIGURE 4 is a cross-sectional view taken through Section 4-4 of FIGURE 1.

FIGURE 5 is a graphical illustration of the resulting exhaust gas flow achieved by the present invention.

## Detailed Description of the Invention

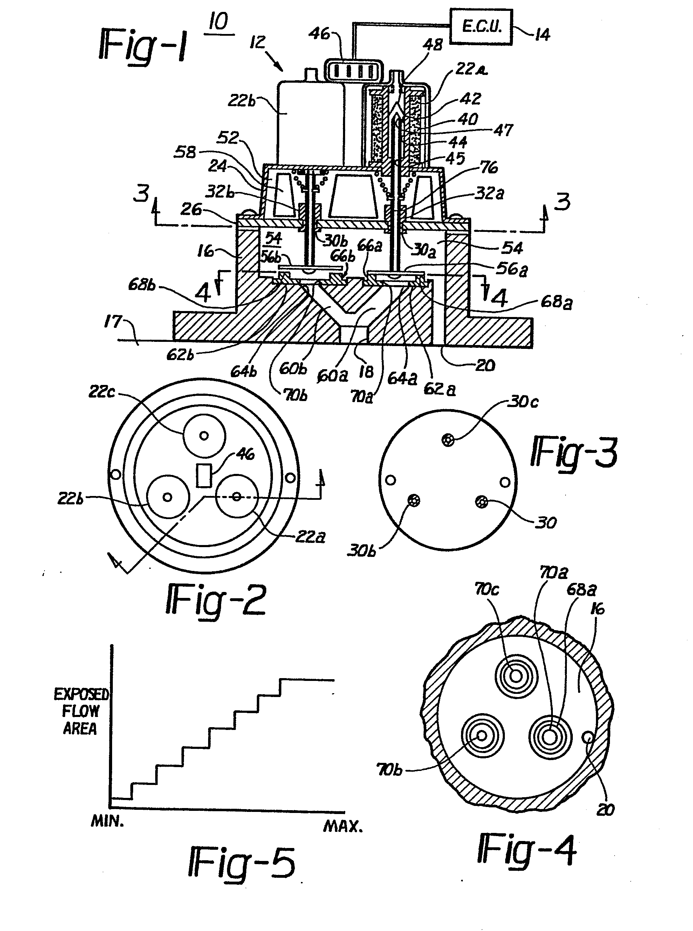

Reference is made to FIGURE 1 which illustrates an electro-mechanically controlled EGR System 10 comprising an EGR valve 12 responsive to signals received from an electronic control unit (ECU) 14. The EGR valve 12 comprises a lower housing member 16 adapted to be mounted to the intake manifold of an engine 17. The lower housing member 16 comprises a first conduit 18 and a second conduit 20. In the preferred embodiment of the invention, the first conduit 18 is adapted to receive manifold vacuum, while conduit 20 is adapted to receive exhaust gas. In this configuration, the flow of exhaust gas is from conduit 20 to conduit 18. It should be appreciated, however, that the connection to the intake manifold and the exhaust system may be reversed. As illustrated in FIGURE 1, by having the exhaust gas flow from conduit 20 through 18 aids in the seating and response of a plurality of flat plate poppet valves.

The EGR valve 12 comprises a plurality of electrically responsive solenoid valves 22a, b and c. Only the solenoids 22a and b are shown in FIGURE 1, however their relative placing are illustrated in the top view of FIGURE 2. The solenoids 22 are secured to an upper housing member 24 which in turn is attached to the lower housing member 16. A plate 26 having a plurality of openings 30a-c separates the housing members 16 and 24. The plate 26 is more clearly illustrated in FIGURE 3.

Reference is now made to solenoid 22a of FIGURE 1, which is shown in partial cross-section. The construction of each solenoid 22 (22a, b, c) is identical to the remaining solenoids. Solenoid 22a comprises a coil 40 wound about a bobbin 42 or similar carrier defining a central passage 44. The coil 40 of each of the solenoids is connected to an electrical connector 46 which receives signals from the ECU 14. The bobbin 42 defines a central opening 45 through which a shaft or pin 76 extends. The pin 76 also extends upwardly within passage 44. The upper end 47 of pin 76 is adapted to engage a motion stop 48 situated within passage 44. Each pin 76 extends from its corresponding central opening 45 and through a corresponding one of the openings or hole 30a-c located on the plate 26. More specifically, each pin 76 is guided relative to its corresponding hole 30 by a guide 32 (32 a, b, c) which further functions to provide a seal between the upper 52 and lower 54 chambers of the housing (14, 24). The housing 24 further includes vent holes 58 to provide atmospheric pressure to the top side of guide 32. The lower extreme, as viewed in FIGURE 1, of each pin 46 is adapted to receive and move a flat plate valve 56 (56 a, b, c) relative to its corresponding seat or seating surface 66 as discussed in greater detail below.

The lower housing member 16 further includes a plurality of passages 60a-c extending from passage 18. However, only passages 60a and b are shown. There is one such passage 60 associated with each flat plate valve 56. Each passage 60a-c terminates at a surface 62 (62a, b c) within the lower housing member 16 defining another series of openings 64a-c. Surrounding each opening 64a-c and seated upon each surface 62a-c, is the valve seat 66a-c each of which includes the flat seating surface 68a-c adapted to engage the flat plate valve 56. Each valve seat 66a-c further includes an orifice 70a-c of a differing preset dimension. In the embodiment illustrated in the accompanying figures there are three orifices dimensioned to provide the following ratio of the total exhaust flow 1/7th, 2/7ths and 4/7ths. Utilizing the sharp-edged orifices such as orifices 64a-d reduces the tendency for carbon to accumulate thereon and yields precise EGR flow which is determined by the size of the orifice which is independent of valve 56 or pin 46 motion.

The EGR valve 12 is compatible to operate with engines equipped with an electronic control unit or electronic control module 14. These modules or units 14 are known to be capable of calculating the required EGR flow and supply an appropriate signal to the EGR valve. Those familiar with the operation of modern ECU's will appreciate that such an electronic control unit 14 may have stored therein a table of values which defines the required EGR flow as a function of engine RPM and as well as other variables such as temperature. In response to the control signal received by one of the three coils 40, it is possible to selectively energize an appropriate coil or group of coils 40 to control the degree or percentage of exhaust flow from 0% to 100% in a discrete number of equal steps. If three solenoids 22 and orifices 70 are used seven discrete steps are achieved. Reference is briefly made to Table 1 and FIGURE 5 which illustrate the sequence of solenoid energization and the resulting exhaust gas flow. In Table 1 the '0' represents a non-activated coil, and '1' represents an activated coil. FIGURE 5 illustrates the flow area variation as the solenoids 22 are activated.

Many changes and modifications in the above described embodiment of the invention can of course be carried out without departing from the scope thereof. Accordingly, that scope is intended to be limited only by the scope of the appended claims.

-6-

## Solenoid Energized

| | | 1/7 | 2/7 | 4/7 |
|---|---|---|---|---|
| | | 22b | 22a | 22c |
| Total | 0 | 0 | 0 | 0 |
| Units of | 1 | 1 | 0 | 0 |
| EGR Flow | 2 | 0 | 1 | 0 |
| (sevenths) | 3 | 1 | 1 | 0 |
| | 4 | 0 | 0 | 1 |
| | 5 | 1 | 0 | 1 |
| | 6 | 0 | 1 | 1 |
| | 7 | 1 | 1 | 1 |

Table - 1

CLAIMS:

1.  In an EGR system (12) for controlling the amount of exhaust gas recirculation flow between an exhaust gas conduit and the intake manifold having a plurality of solenoid actuated valves (22) situated in a conduit linking the exhaust gas system and the intake manifold having associated with each of said plurality of solenoid responsive valves (22) an orifice (70) sized to permit the flow of a predetermined though different fraction of the total desired exhaust gas flow, the method comprising energizing a particular one or group of said solenoid responsive valves in a predetermined order such that the composite flow through said orifices is achieved.

2.  The method as defined in Claim 1 wherein the plurality of solenoid responsive valves comprises three valves and wherein the fraction of flow through said corresponding three orifices is one-seventh, two-sevenths and four-sevenths.

3.  The method as defined in Claim 1 including the steps of providing three solenoids (22) and a like number of orifices (70) and sizing said orifices to yield one-seventh, two-sevenths and four-sevenths of the total desired exhaust gas flow.

4.  A method of controlling the percentage of exhaust gas recirculation flow between the exhaust gas system and the intake manifold of an engine, the steps comprising:

providing a plurality of variable sized orifices and a conduit linking the exhaust gas system and the intake manifold;

providing a like number of solenoid valves in operative relation to said orifices;

providing means for biasing said solenoids to close said orifices to prevent flow therethrough during intervals when said solenoids are not energized; and

activating a predetermined number of said solenoids to permit exhaust gas flow therethrough.

5.  The method as defined in Claim 4 wherein the steps of activating includes:

varying the number of activated solenoids in response to at least one engine parameter.

6. An EGR valve (12) adapted to control the flow between an exhaust gas system and the intake manifold of an engine, the EGR (12) comprising:

a lower housing member (16) having a first passage (18) adapted to receive either exhaust gas flow or manifold vacuum and a second passage (20) adapted to communicate with the other of the exhaust gas flow or manifold vacuum;

a plurality of passages (60 a-c) extending from said first passage (18) and terminating at openings (64 a-c);

a plurality of orifices (70) received upon said plurality of openings (64) for limiting the flow therethrough to a predetermined fraction of the flow through said first passage (18);

a plurality of valve seats (68) one associated with each said orifice mounted in surrounding relation relative to a corresponding one of said openings (64); and

a plurality of solenoid responsive valves (22, 56) responsive to electric control signals and adapted to selectively engage a corresponding one of said valve seats for permitting exhaust gas flow through the corresponding one of said orifices during intervals when a particular solenoid is activated.

7. The EGR valve (12) as defined in Claim 6 wherein said plurality of EGR valves is three and wherein the flow area of each of said orifices is sized to yield one-seventh, two-sevenths and four-sevenths of the desired exhaust gas flow through passage (18).

8. The EGR valve (12) as defined in Claim 7 further including an upper housing member (24) supported upon said lower housing member (16);

a spacer plate mounted between said upper housing member (24) and said lower housing member (16) having a plurality of openings (30) therein, the number of openings corresponding to the number of solenoid valves (22);

each of said solenoid valves comprising a coil and an armature or pin (76) movable in response to said control signal and biasing means adapted to bias each of said pins in an outward direction relative to said coil, each of said pins extending beyond and through a corresponding one of said openings (30) in said plate (26); and

a plurality of flat plate valves (56) attached to and movable with a corresponding one of said pins (76) and adapted to selectively engage a corresponding one of said valve seats (66).

9. The EGR valve as defined in Claim 8 wherein said plate comprising guide means (32) mounted in surrounding relation to each of said openings (30) for receiving a corresponding one of said pins (76) therethrough.

10. The EGR valve as defined in Claim 9 wherein said guide means includes sealing means for preventing the flow of exhaust gas from the lower housing member to the upper housing member.

Fig-1

E.C.U.

Fig-2

Fig-3

Fig-4

Fig-5

EXPOSED
FLOW
AREA

MIN.                    MAX.